(19) Europäisches Patentamt
European Patent Office
Office européen des brevets

(11) EP 3 512 015 A1

(12) EUROPEAN PATENT APPLICATION
published in accordance with Art. 153(4) EPC

(43) Date of publication:
**17.07.2019 Bulletin 2019/29**

(21) Application number: **17849143.7**

(22) Date of filing: **08.09.2017**

(51) Int Cl.:
***H01M 4/86*** $^{(2006.01)}$ ***H01M 8/18*** $^{(2006.01)}$

(86) International application number:
**PCT/KR2017/009902**

(87) International publication number:
**WO 2018/048259 (15.03.2018 Gazette 2018/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **09.09.2016 KR 20160116567**

(71) Applicant: **Lotte Chemical Corporation**
**Seoul, 05551 (KR)**

(72) Inventors:
- **BAE, Suyeon**
**Daejeon 34120 (KR)**
- **CHOI, Eun Mi**
**Daejeon 34120 (KR)**
- **KIM, Dae Sik**
**Daejeon 35367 (KR)**
- **JUNG, Min Suk**
**Daejeon 34034 (KR)**

(74) Representative: **Agasse, Stéphane et al**
**Cabinet GERMAIN & MAUREAU**
**B.P. 6153**
**69466 Lyon Cedex 06 (FR)**

(54) **SLURRY COMPOSITION FOR MANUFACTURING ELECTRODE OF REDOX FLOW BATTERY AND METHOD FOR MANUFACTURING ELECTRODE OF REDOX FLOW BATTERY**

(57) The present invention relates to a slurry composition for producing an electrode for a redox flow battery, the composition comprising a carbon compound powder, a binder resin including a predetermined polymer substituted with one or more anion exchange functional groups, and a hydrophobic organic solvent; a method for producing an electrode for a redox flow battery by using the slurry composition; a carbon-based electrode including a dried product of the slurry composition for producing an electrode for a redox flow battery; and a redox flow battery including the same

【FIG. 1】

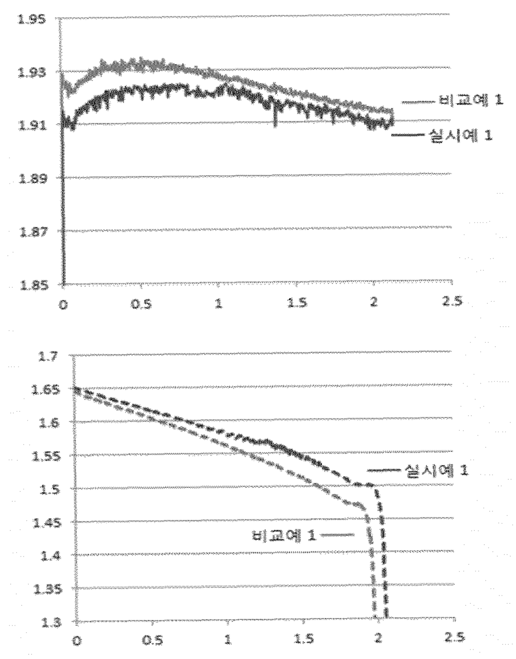


실시예 : Example

비교 실시예: Comparative Example

EP 3 512 015 A1

## Description

### [Technical Field]

The present invention relates to a slurry composition for producing an electrode for a redox flow battery and a method for producing an electrode for a redox flow battery. More specifically, the present invention relates to a slurry composition for producing an electrode for a redox flow battery capable of increasing the lifetime of a battery by preventing deterioration of battery performance even during long-term driving, and of providing an electrode having uniform thickness and physical properties, and a method for producing an electrode for a redox flow battery using the slurry composition.

### [BACKGROUND ART]

Existing power generation systems, such as with thermal power generation emitting a large amount of greenhouse gases and environmental pollutions by using fossil fuels, and with nuclear power plants entailing their stability issue and hazardous waste processing, have come to various destined breaking points. In response thereto, research efforts have increased significantly to develop environmentally friendlier, higher efficiency energy sources and a power supply system using the same.

In particular, power storage technology has been the focus of research and development activities for broadening the usability of renewable energy sources against their significant susceptibility to external conditions and for enhancing the efficiency of power utilization, wherein secondary batteries receive more intensive interest and their research and development efforts are actively made.

Redox flow battery refers to an oxidation/reduction battery capable of converting chemical energy of an active substance directly into electrical energy, and is an energy storage system capable of preserving renewable energy with high output fluctuation depending on external environment such as sunlight, wind power and converting it into high quality electric power. Specifically, in the redox flow battery, electrolytic solution containing an active material that causes an oxidation/reduction reaction circulate between opposite electrodes and the storage tank to proceed charging and discharging.

Such a redox flow battery typically includes a tank for storing active materials in different oxidized states, a pump for circulating the active materials during charge/discharge, and a unit cell partitioned by a separation membrane, wherein the unit cell includes an electrode, an electrolyte, and a separation membrane.

Currently, electrode which is one of the components that have the greatest influence on the battery performance of the chemical flow battery, is produced by a method in which a carbon compound having a large reaction area is coated onto a conductive plastic sheet in order to maximize the oxidation-reduction reaction.

However, in the method of coating an adhesive binder on a predetermined sheet and coating a carbon compound powder, the carbon compound powder may not be uniformly coated in some cases. Performing the thermo-compression bonding process to fix the carbon compound powder may lead to a decrease in the productivity of the final product, and there is a limitation in that the thermo-compression bonded carbon compound powder may be peeled off at a later time and thus the performance of the battery can be deteriorated.

In addition, in order to more uniformly apply the carbon compound powder, spraying method, rolling method, brushing method, etc. have been used. However, there are drawbacks that it is difficult to apply it to the process of mass-producing electrodes, variations occur in the amount of the applied carbon compound powder to exhibit performance deviation between the batteries, and a battery produced by applying the above method also shows a phenomenon that the carbon compound powder is peeled off from the electrode layer, and thus the performance of the battery is deteriorated.

Thus, there is a need to develop a method capable of increasing the lifetime of the battery by minimizing the peeling phenomenon of carbon even during long-term driving, and also producing an electrode layer having uniform thickness and physical properties.

### [DETAILED DESCRIPTION OF THE INVENTION]

### [Technical Problem]

It is an object of the present invention to provide a slurry composition for producing an electrode for a redox flow battery capable of increasing the lifetime of a battery by preventing deterioration of battery performance even during long-term driving, and of providing an electrode having uniform thickness and physical properties.

It is another object of the present invention to provide a method for producing an electrode for a redox flow battery using the aforementioned slurry composition.

It is a further object of the present invention to provide a redox flow battery including a carbon-based electrode produced using the aforementioned slurry composition.

**[Technical Solution]**

In order to achieve the above objects, the present invention provides a slurry composition for producing an electrode for a redox flow battery including: a powder of carbon compound having electrical conductivity and an ordered mesoporous carbon having average diameter of pores of 3 nm to 4 nm; a binder resin including one or more polymers selected from the group consisting of perfluoro-based polymers, benzimidazole-based polymers, polyimide-based polymers, polyetherimide-based polymers, polyphenylene sulfide-based polymers, polysulfone-based polymers, polyetherketone-based polymers, polyethersulfone-based polymers, polyether ketone-based polymers, polyether-etherketone-based polymer, and polyterylquinoxaline-based polymers, which are substituted with one or more anion exchange groups; and a hydrophobic organic solvent.

The present invention also provides a method for producing an electrode for a redox flow battery including coating the aforementioned slurry composition onto a substrate.

In addition, the present invention provides a redox flow battery including a carbon-based electrode manufactured using the aforementioned slurry composition.

Hereinafter, a slurry composition for producing an electrode for a redox flow battery, a method for producing an electrode for redox flow battery, and a redox flow battery according to specific embodiments of the present invention will be described in detail.

According to one embodiment of the present invention, a slurry composition for producing an electrode for a redox flow battery can be provided including: a powder of carbon compound having electrical conductivity and an ordered mesoporous carbon having average diameter of pores of 3 nm to 4 nm; a binder resin including one or more polymers selected from the group consisting of perfluoro-based polymers, benzimidazole-based polymers, polyimide-based polymers, polyetherimide-based polymers, polyphenylene sulfide-based polymers, polysulfone-based polymers, polyetherketone-based polymers, polyethersulfone-based polymers, polyether ketone-based polymers, polyether-etherketone-based polymer, and polyterylquinoxaline-based polymers, which are substituted with one or more anion exchange groups; and a hydrophobic organic solvent.

The present inventors have found through experiments that an electrode for a redox flow battery can be produced by coating a slurry composition including a binder resin containing a predetermined polymer substituted with one or more anion exchange functional groups, a powder of a carbon compound and a hydrophobic organic solvent onto on a predetermined substrate, and that not only the produced electrode can have uniform thickness and physical properties in the entire region but also each final product can have uniform performance when applied to mass production process, each final product, and further it is produced using a slurry composition having a specific composition, and thus the lifetime of the battery can be increased by minimizing the phenomenon that the carbon compound or the like is peeled off from the electrode layer even during the long term driving. The present invention has been completed on the basis of such findings.

The electrolytic solution used for redox flow battery are composed of zinc ions and bromide ions. During charging, the zinc ions are reduced to solid zinc and plated on the electrode surface, and the bromide ion becomes bromine ($Br_2$). At this time, the generated bromine is easily evaporated due to its low solubility in the electrolytic solution, and the liquid bromine moves to the anode side and reacts with a zinc plate to cause self-discharge. In order to solve these problems, a complex such as 1-ethyl-1-methylpyrrolidinium bromide (abbreviated as MEP-Br) is added to the electrolytic solution to form a complex compound with bromine, thereby increasing the coulombic efficiency. However, these complexes increase the viscosity of the electrolytic solution to lower the flowability, thereby lowering the voltage efficiency.

The present inventors have prepared an electrode having uniform and improved performance by mixing a binder resin containing a predetermined polymer substituted with one or more anion exchange functional groups with the powder of the carbon compound to produce a carbon slurry and then coating the carbon slurry onto a graphite current collector.

The anion exchange functional group (+) contained in the binder resin containing the predetermined polymer substituted with one or more anion exchange functional groups enhances the hydrophilicity of the surface of the electrode, and allows fast electron transfer through the attractive force with the bromide ion (-) in the electrolytic solution to improve the voltage efficiency, and the anion exchange function of the binder itself can function as a complex to form a complex with bromine, thereby improving the coulombic efficiency .

The anionic exchange functional group may contain one or more functional groups selected from the group consisting of ammonium, phosphonium, and sulfonium. Due to the presence of such anionic exchange group, the hydrophilicity of the electrode surface produced from the slurry composition for producing an electrode for the redox flow battery of the above embodiment is increased, and the interaction between the bromide ion and the anion exchange functional group in the electrolytic solution of the battery accelerates the movement of electrons in the electrolytic solution to reduce the resistance between the electrolytic solution and the electrode interface, thereby improving the voltage efficiency.

For example, each of the ammonium, phosphonium, and sulfonium may be substituted with 1 to 4 alkyl groups having 1 to 10 carbon atoms, and more specifically, it can be derived from tri(C1 to C10 alkyl)ammonium, tetra(C1 to C10 alkyl)phosphonium, or tri(C1 to C10 alkyl)sulfonium.

More specifically, the anionic exchange functional group may be any one selected from the group consisting of functional groups derived from compounds of the following Chemical Formulas 1 to 14 and functional groups represented by the following Chemical Formulas 16 to 18.

[Chemical Formula 1]

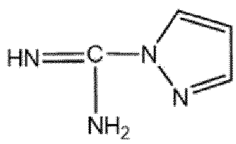

[Chemical Formula 2]

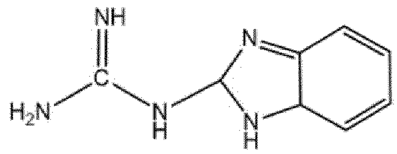

[Chemical Formula 3]

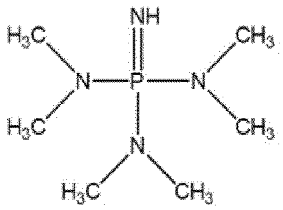

[Chemical Formula 4]

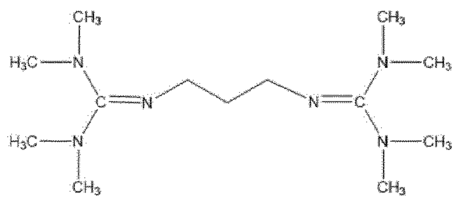

[Chemical Formula 5]

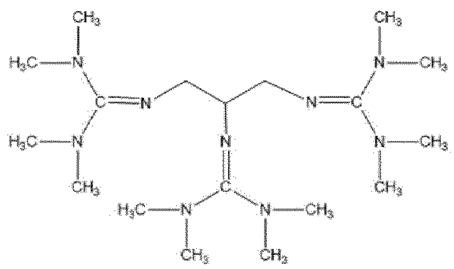

[Chemical Formula 6]

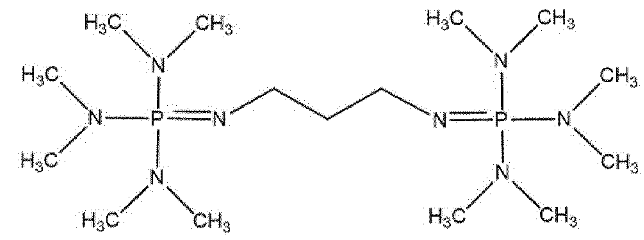

[Chemical Formula 7]

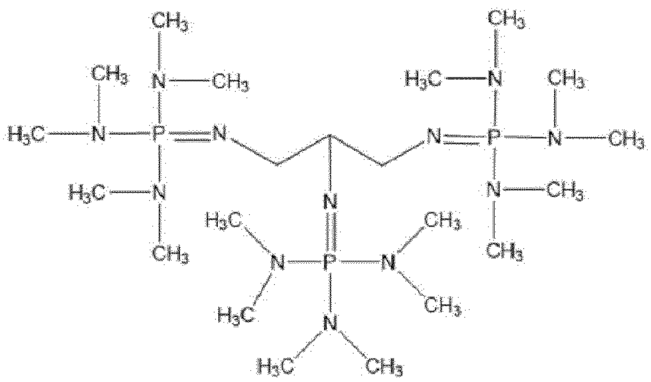

[Chemical Formula 8]

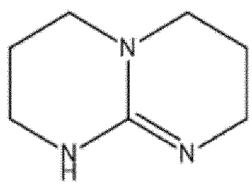

[Chemical Formula 9]

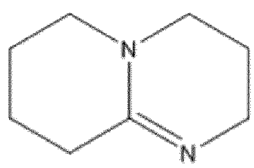

[Chemical Formula 10]

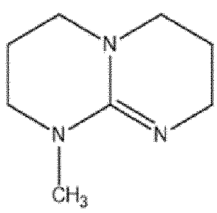

[Chemical Formula 11]

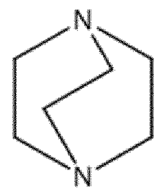

[Chemical Formula 12]

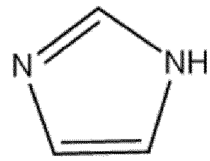

[Chemical Formula 13]

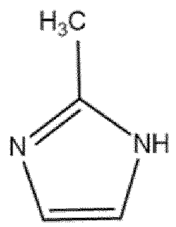

[Chemical Formula 14]

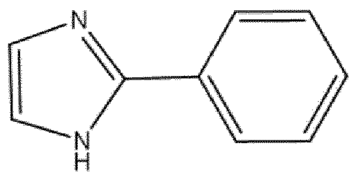

in Chemical Formulas 1 to 14, the point at which the compound is bonded to a polymer contained in the binder resin containing the polymer is a double bond point between nitrogen and carbon, and it is the point of imparting the ion exchange ability by the methylation reaction.

[Chemical Formula 16]

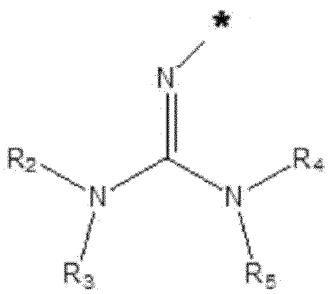

in Chemical Formula 16, * is a point of attachment, $R_2$, $R_3$, $R_4$ and $R_5$ are each H, $-CH_3$, $-NH_2$, $-NO_2$, $-(CH_2)nCH_3$ (n = 1 to 6), HC(=O)-, $CH_3C(=O)-$, $NH_2C(=O)-$,$-(CH_2)nCOOH$(n=1 to 6), $-(CH_2)n-CH(NH_2)-COOH$(n= 1 to 6), -[CH-(COOH)] $-CH_2-COOH$, $-CH_2-CH(O-CH_2CH_3)_2$, $-(C=S)-NH_2$, $-(C=NH)-NH-(CH_2)nCH_3$(n= 0 to 6),-NH-(C=S)-SH, $-CH_2-(C=O)-O-C(CH_3)_3$, $-O-(CH_2)n-CH_2-(NH_2)-COOH$(n= 1 to 6),$-(CH_2)n-CH=CH_2$(n= 1-6), $-(CH_2)n-CH_2-CN$(n= 1 to 6), an aromatic functional group having 6 to 20 carbon atoms or a halogen group,

[Chemical Formula 17]

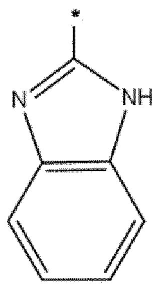

[Chemical Formula 18]

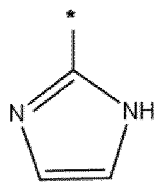

in Chemical Formulas 17 to 18, * is a point of attachment.

The binder resin serves to bind the powder of the carbon compound having electrical conductivity contained in the electrode and the ordered mesoporous carbon having an average pore diameter of 3 nm to 4 nm and to form a substrate of the electrode.

As described above, specific examples of the binder resin include perfluoro-based polymers, benzimidazole-based polymers, polyimide-based polymers, polyetherimide-based polymers, polyphenylene sulfide-based polymers, polysulfone-based polymers, polyetherketone-based polymers, polyethersulfone-based polymers, polyether ketone-based polymers, polyether-etherketone-based polymer, and polyterylquinoxaline-based polymers, or mixtures of two or more thereof.

The binder resin may have a weight average molecular weight of 10,000 to 300,000. The weight average molecular weight means a weight average molecular weight in terms of polystyrene measured by GPC method.

On the other hand, the slurry composition for producing an electrode for redox-flow battery may include an ordered mesoporous carbon having an average pore diameter of 3 nm to 4 nm together with a powder of a carbon compound having electric conductivity.

The ordered mesoporous carbon refers to a carbon having three-dimensionally ordered and interconnected pores (diameter: about 2 nm to 50 nm), and is also known as 'OMC'. The ordered mesoporous carbon can be generally produced by the filling of the pores of a mesoporous material (e.g., a silica material such as SBA-15, MCM-41 and MCM-48) with a carbon precursor, subsequent carbonization of the composite and final removal of the mesoporous material.

In order to provide more oxidation/reduction reaction site through a wide pore volume and a specific surface area, and provide a structure with uniformly distributed pores, thereby smoothly flowing the electrolytic solution and suppressing the polarization phenomenon, an ordered mesoporous carbon having an average pore diameter of 3 nm to 4 nm can be used.

On the other hand, as described above, the slurry composition for producing an electrode for a redox flow battery may include an ordered mesoporous carbon having an average pore diameter of 3 nm to 4 nm together with a powder of a carbon compound having electrical conductivity. In this case, in the slurry composition for producing an electrode for a redox flow battery, the weight ratio between the powder of the carbon compound having electric conductivity and the ordered mesoporous carbon with a pore size of 3 nm to 4 nm may be 1: 10, or 2: 8, or 3: 7 (powder of the carbon compound having electric conductivity: ordered mesoporous carbon with a pore size of 3 nm to 4 nm).

As the weight ratio between the powder of the carbon compound having the electric conductivity and the ordered

mesoporous carbon satisfies the above-mentioned range, the above-mentioned effects, for example, effects of providing more oxidation/reduction reaction site through a wide pore volume and a specific surface area, and providing a structure with uniformly distributed pores, thereby smoothly flowing the electrolytic solution and suppressing the polarization phenomenon can be easily realized.

It is preferable that the powder of the carbon compound having electrical conductivity has a high electrical conductivity so that the electrode formed from the slurry composition can more efficiently flow in or out. Specific examples of the powder of the carbon compound having such electric conductivity include carbon black, carbon nanotube, graphite, PAN-based carbon fiber, pitch-based carbon fiber, activated carbon, amorphous carbon, or a mixture of two or more thereof. As a commercial example of such a carbon compound powder, graphite (SG, GFG5), PAN-based carbon fiber (GECF, Carbon Felt), activated carbon (Samchully Carbotec, OC), and amorphous carbon (Mitsubishi, 300J) can be mentioned.

In order to achieve more uniform and improved physical properties and electrical conductivity in the electrode which is more uniformly dispersed and produced in the slurry composition, the powder of the carbon compound having electric conductivity may have a maximum diameter of 5 $\mu$m to 100 $\mu$m.

The hydrophobic organic solvent can more easily dissolve the powder of carbon compound having electric conductivity having hydrophobic properties, the ordered mesoporous carbon having an average diameter of pores of 3 nm to 4 nm and the binder resin. The solvent can be uniformly mixed and dispersed to have the above-described slurry characteristics. Specific examples of the hydrophobic organic solvent include toluene, xylene, N-methyl pyrrolidone, dimethyl sulfoxide, dimethylacetate, or a mixture of two or more thereof.

On the other hand, the slurry composition for producing an electrode for the redox flow battery of the above embodiment may further include a dispersant in order to allow the components of the slurry composition to be more uniformly dispersed and distributed to form a dispersion or a slurry phase. Specific examples of such dispersant include nonionic surfactants, silicone defoaming agents, modified urea blends, or silicone based surfactants.

As the nonionic surfactants that can be used as the dispersant, Surfynol 440, Surfynol 420, Surfynol 61, Triton X-100, Tween 20, and the like can be mentioned. As the silicone defoaming agent, BYK-024 and the like can be mentioned. As the modified urea blend, products such as BYKETOL-PC can be mentioned. Specific examples of the silicone-based surfactant include products such as DISPERBYK®-162.

On the other hand, in the slurry composition for producing an electrode for the redox flow battery, the content of the above-mentioned components can be controlled according to the characteristics of the slurry to be produced and the characteristics of the electrode. For example, the slurry composition for producing an electrode for the redox flow battery may include 1 to 90% by weight of a powder of carbon compound having electrical conductivity and an ordered mesoporous carbon having an average pore diameter of 3 nm to 4 nm; 1 to 90% by weight of a binder resin; and 1 to 90% by weight of a hydrophobic organic solvent. Further, preferably, the slurry composition for producing an electrode for the redox flow battery may include 20 to 80% by weight of a powder of carbon compound having electrical conductivity and an ordered mesoporous carbon having an average pore diameter of 3 nm to 4 nm; 5 to 50% by weight of a binder resin; and 10 to 70% by weight of a hydrophobic organic solvent.

In addition, since the reaction rate of $Zn/Zn^{2+}$ couple in a cathode during the reaction in the zinc/bromine (Zn/Br) redox flow battery is faster than the reaction rate of $Br_2/Br^-$ couple in an anode, it is possible to increase the reaction rate at the anode by coating the ordered mesoporous carbon on the anode side.

On the other hand, the slurry composition can be obtained by forming a powder of carbon compound having electrical conductivity and an ordered mesoporous carbon having an average pore diameter of 3 nm to 4 nm; a binder resin; and a hydrophobic organic solvent into a slurry phase using a mixing method commonly used in the art. In this case, the usable mixing method is not particularly limited, and for example, a slurry having a uniform composition can be formed by stirring at a high speed via a homogenizer or a stirrer, or using methods using devices, such as a dissolver using a screw, a three-roll mill passing through a gap of a roll, a ball mill using a collision of balls, an agitator mill using a collision between particles, or an ultrasonic mixer.

In the aforementioned slurry composition, the order of mixing a powder of carbon compound having electrical conductivity and an ordered mesoporous carbon having an average pore diameter of 3 nm to 4 nm; a binder resin; and a hydrophobic organic solvent is not particularly limited, and the slurry composition can be produced by adding or mixing the respective components in various orders.

The composition obtained by mixing and stirring the above components may be a slurry phase, and such a slurry composition may include particles having an average particle size of 10 to 200 $\mu$m. The binder resin can be bonded to the powder of carbon compound having electrical conductivity and the ordered mesoporous carbon having an average pore diameter of 3 nm to 4 nm to be uniformly dispersed in the hydrophobic organic solvent. Thereby, a uniformly dispersed slurry phase and particles having the average particle size can be formed.

The slurry composition for producing an electrode for the redox flow battery may have a viscosity of 500 to 10,000 cps, and preferably 1,000 to 7,000 cps.

On the other hand, according to another embodiment of the invention, a method for producing an electrode for

a redox flow battery can be provided including a step of coating the slurry composition for producing an electrode for the redox flow battery onto a substrate.

As described above, the electrode for the redox flow battery can be produced by applying the slurry composition having a specific composition to a predetermined substrate. Not only such an electrode can have uniform thickness and physical properties in the entire region, but also each final product can have uniform performance even when applied to a mass preparation process. Further, the lifetime of the battery can be increased by minimizing the phenomenon in which the carbon compound or the like is peeled off from the electrode layer even during long-term driving.

The slurry composition for producing an electrode for the redox flow battery may be coated onto the substrate in a thickness of 1 to 300 $\mu$m, or 5 to 200 $\mu$m.

The substrate is a support for the slurry composition to be coated and can be removed when a solid state electrode is formed through a subsequent drying process or the like. Specific examples of such substrate are not limited, but various conductive plastic sheets, organic substrates (e.g., polymer substrates, etc.), inorganic substrates (e.g., metal substrates, etc.), glass substrates, and organic compound substrates such as fibers and woods can be used.

The coating of the slurry composition can be carried out by using various coating or applying methods commonly known in the art, and for example, slot-die coater, comma coater, blade coater, gravure coater, bar coater, or lip coater can be used.

Meanwhile, the method for producing the electrode for the redox flow battery may further include a step of drying the coated slurry composition. The method, device or temperature conditions that can be used in such drying step are not particularly limited, and a method of heating with a predetermined heat source, a method of ventilation, a method of drying at room temperature or low temperature, and the like can be used variously.

In addition, to ensure more uniform coating and uniformity of the slurry composition, the method for producing the electrode for a redox flow battery may further include a step of deaerating the slurry composition.

On the other hand, according to another embodiment of the present invention, a redox flow battery including the carbon-based electrode produced using the slurry composition for producing the electrode for the redox flow battery can be provided.

In addition, according to another embodiment of the present invention, a redox flow battery including the carbon-based electrode containing a dried product of the slurry composition for producing the electrode for the redox flow battery.

The redox flow battery may include a tank containing active materials in different oxidized states; a pump for circulating the active materials during charge/discharge; electrodes, electrolytes and unit cells partitioned by a separation membrane, wherein the unit cells may include the carbon-based electrode, electrolytes, and a porous separation membrane.

**[ADVANTAGEOUS EFFECTS]**

According to the present invention, there can be provided a slurry composition for producing an electrode for a redox flow battery capable of increasing the lifetime of a battery by preventing deterioration of battery performance even during long-term driving, and of providing an electrode having uniform thickness and physical properties, a method for producing an electrode for a redox flow battery using the slurry composition, a carbon-based electrode containing a dried product of the slurry composition for producing the electrode for the redox flow battery, and a redox flow battery including the same.

**[BRIEF DESCRIPTION OF THE DRAWINGS]**

FIG. 1 shows the results of charge/discharge experiments of Examples and Comparative Examples.

**[DETAILED DESCRIPTION OF THE EMBODIMENTS]**

Hereinafter, the present invention will be described by way of the following examples. However, these examples are provided for illustrative purposes only and not intended to limit the scope of the present invention thereto.

**[Synthesis Example: Synthesis of polysulfone-based polymer substituted with anion exchange functional group]**

5 g of Polysulfone (weight average molecular weight of about 20,000) and 200ml of chloroform were stirred at room temperature for 1 hour, to which 3.4 g of paraformaldehyde and 50 ml of chloroform were further added, and the mixture was stirred at 55°C.

To the reaction solution, 14.5 ml of $(CH_3)_3SiCl$ and 289 uL of $SnCl_4$ were added successively and then allowed to react for 24 hours. The reaction solution was stirred with 1 L of methanol for 24 hours, and then filtered via a filter paper. The obtained compound was dried under vacuum.

After the drying, the obtained material was dissolved in a solvent of dimethylacetamide (DMAC), and then 7 ml of trimethylammonium (TMA) was added thereto and stirred for 48 hours. Thereby, a solution in which the binder resin was dissolved was obtained. The ion exchange capacity (IEC mmol/g) of the polymer substituted with an anion exchange functional group synthesized in the above Example was about 2.0.

**[Example and Comparative Example: Production of slurry compositions for producing electrode for redox flow battery]**

**Example 1**

Ordered mesoporous carbon (Lotte Chemical, MPC), conductive carbon (Timcal, Super-P), and polysulfone-based polymer having an ammonium-based functional group provided in Synthesis Example 1 were respectively added to toluene in the amounts shown in Table 1 below, and then mixed in an ultrasonic mixer (Branson) for 1 hour to produce a slurry composition.

**Comparative Example 1**

Activated carbon (Calgon, TOG-LF), conductive carbon (Timcal, Super-P), and binder resin (Genpoly Co., GMP5070E) were respectively added to toluene in the amounts as shown in Table 1, and then mixed in an ultrasonic mixer (Branson) for 1 hour to produce a slurry composition.

**Comparative Example 2**

Ordered mesoporous carbon (Lotte Chemical, MPC), conductive carbon (Timcal, Super-P), and binder resin (Genpoly, GMP5070E) were respectively added to toluene in the amounts as shown in Table 1 below, and then mixed in an ultrasonic mixer (Branson) for 1 hour to produce a slurry composition.

[Table 1]

| | Carbon (wt%) | Conductive carbon (wt%) | Binder resin (wt%) | Toluene (wt%) | DMAC (wt%) |
|---|---|---|---|---|---|
| Example 1 | 21.2 | 3.7 | 17.4 (Aminated polysulfone) | | 57.7 |
| Comparative Example 1 | 21.2 | 3.7 | 17.4 (Genpoly) | 57.7 | |
| Comparative Example 2 | 21.2 | 3.7 | 17.4 (Genpoly) | 57.7 | |

The specific surface area, pore volume, and pore diameter of the used activated carbon and ordered mesoporous carbon are shown in Table 2 below.

[Table 2]

| Carbon | Specific surface area ($m^2/g$) | Pore volume ($cm^3/g$) | Average pore size (nm) |
|---|---|---|---|
| TOG-LF | 888 | 0.48 | about 2.2 |
| Ordered mesoporous carbon | 1253 | 1.57 | about 3.4 |

**[Experimental Example: Production of Electrode of Redox Flow Battery and Evaluation of Physical Properties of Electrode]**

The slurry compositions produced in Example 1 and Comparative Example 1 were coated onto a graphite current collector with a doctor blade (reaction area 5 x 7 $cm^2$), and the content of the coated solid matter was adjusted to about 6 $mg/cm^2$; and then each unit battery test was conducted. The results of the unit battery charge/discharge test are shown in Table 3 and FIG. 1. The charge/discharge condition was carried out at 20 $mA/cm^2$, and the average efficiency of 5 cycles was exhibited.

In the following Experimental Examples, the energy efficiency, voltage efficiency and coulombic efficiency of

a zinc-bromine redox flow battery were measured by the following method.

$$(1)\ \text{Energy Efficiency (EE)} = (\text{Discharge energy (Wh)} / \text{Charge energy (Wh)}) * 100$$

$$(2)\ \text{Voltage Efficiency (VE)} = (\text{Energy efficiency} / \text{Coulombic efficiency}) * 100$$

$$(3)\ \text{Coulombic Efficiency (CE)} = (\text{Discharge capacity (Ah)} / \text{Charge capacity (Ah)}) * 100$$

[Table 3]

| | Efficiency value (%) | | | Nominal voltage (V) | |
|---|---|---|---|---|---|
| | Energy efficiency | Voltage efficiency | Coulombic efficiency | Under charge | Under dischare |
| Example 1 | 78.3 | 83.9 | 93.3 | 1.89 | 1.58 |
| Comparative Example 1 | 74.8 | 79.6 | 93.9 | 1.92 | 1.54 |
| Comparative Example 2 | 76.3 | 83.0 | 92.1 | 1.89 | 1.57 |

As shown in Table 3, comparing the charge/discharge results of Example 1 and Comparative Examples 1 and 2, it was shown that in the case of Example 1 using the ordered mesoporous carbon having average diameter of pores of 3 nm to 4 nm together with the powder of carbon compound having electrical conductivity, the energy efficiency and voltage efficiency were increased by about 4% as compared with Comparative Example 1, and the nominal voltage was lower during charge and higher during discharge as compared with that of Comparative Example 1. In addition, it can be confirmed that in the case of Example 1 using a polymer having an ammonium-based functional group as a binder, the energy efficiency, the voltage efficiency and the charge efficiency were higher than those of Comparative Example 2, and the voltage efficiency and the coulombic efficiency were higher as a whole, as compared with Comparative Example 2.

More specifically, it was shown that the voltage efficiency of Example 1 was relatively higher than that of Comparative Example 1, and the nominal voltage was low during charge and was high under discharge. This is presumably because the ammonium-based functional group contained in the carbon slurry enabled rapid electron transfer through the interaction of the bromide ion with the (+) ion during charging, and at the same time, zinc ions were rapidly reduced, allowing for zinc plating at low voltage bands. Further, since bromine which was held by the ammonium-based functional group during discharging received electrons directly from the electrode active layer and was easily reduced, the electrode produced in Example 1 had a higher discharge voltage than the electrode of Comparative Example 1.

In addition, the coulombic efficiency of Example 1 was also higher by about 1.4% as compared with Comparative Example 1. This is presumably because the ammonium-based functional group forms a complex with bromine in the electrolytic solution and thus contributes to prevent evaporation of bromine and to reduce self-discharge through the membrane.

Further, in Example 1, as the powder of the carbon compound having electric conductivity and the ordered mesoporous carbon were included together, more oxidation/reduction reaction sites were provided and a structure with uniformly distributed pores was provided, thereby achieving the effect of by smoothly flowing the electrolyte solution and suppressing the polarization phenomenon.

## Claims

1. A slurry composition for producing an electrode for a redox flow battery comprising:

   a powder of carbon compound having electrical conductivity and an ordered mesoporous carbon having average diameter of pores of 3 nm to 4 nm;
   a binder resin including one or more polymers selected from the group consisting of perfluoro-based polymers, benzimidazole-based polymers, polyimide-based polymers, polyetherimide-based polymers, polyphenylene sulfide-based polymers, polysulfone-based polymers, polyetherketone-based polymers, polyethersulfone-based polymers, polyether ketone-based polymers, polyether-etherketone-based polymer, and polyterylquinoxaline-based polymers, which are substituted with one or more anion exchange groups; and
   a hydrophobic organic solvent.

2. The slurry composition for producing an electrode for a redox flow battery according to claim 1, wherein the anionic exchange functional group contains one or more functional groups selected from the group consisting of ammonium, phosphonium, and sulfonium.

3. The slurry composition for producing an electrode for a redox flow battery according to claim 1, wherein the binder resin has a weight average molecular weight of 10,000 to 300,000.

4. The slurry composition for producing an electrode for a redox flow battery according to claim 1, wherein the anionic exchange functional group is any one selected from the group consisting of functional groups derived from compounds of the following Chemical Formulas 1 to 14 and functional groups represented by the following Chemical Formulas 16 to 18.

[Chemical Formula 1]

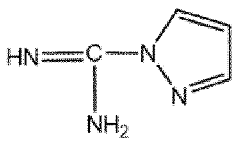

[Chemical Formula 2]

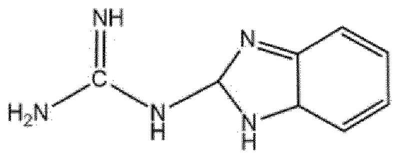

[Chemical Formula 3]

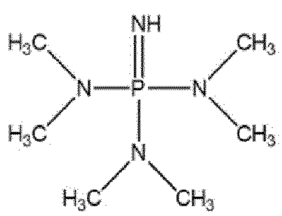

[Chemical Formula 4]

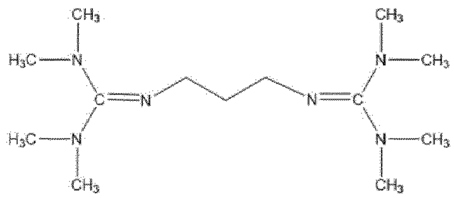

[Chemical Formula 5]

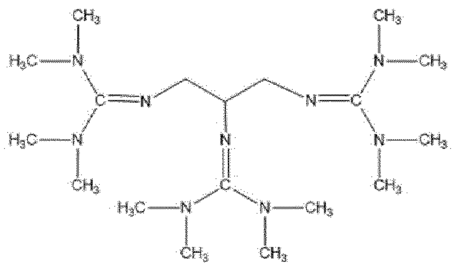

[Chemical Formula 6]

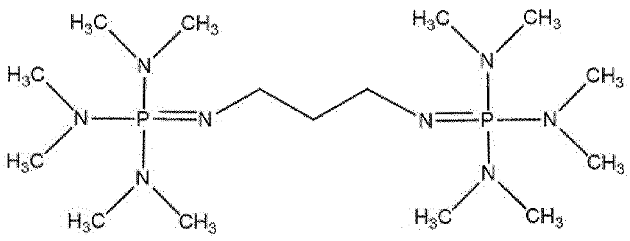

[Chemical Formula 7]

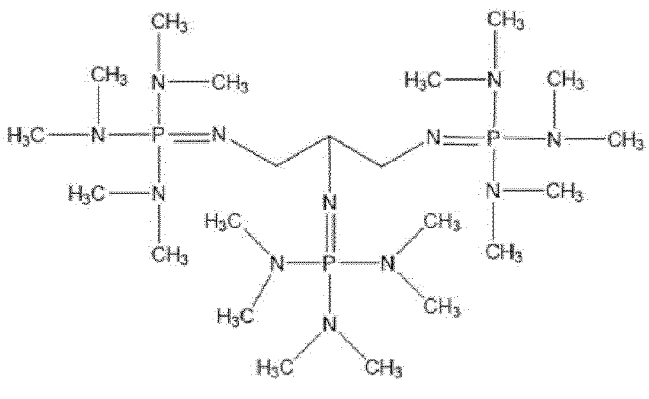

[Chemical Formula 8]

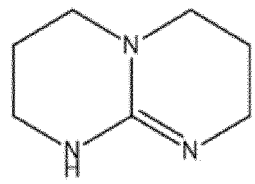

[Chemical Formula 9]

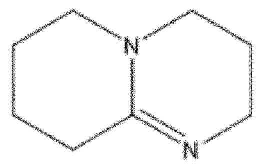

[Chemical Formula 10]

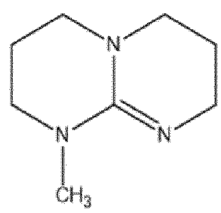

[Chemical Formula 11]

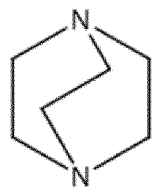

[Chemical Formula 12]

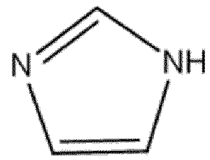

[Chemical Formula 13]

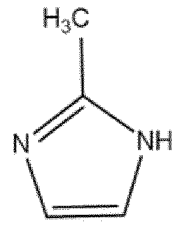

[Chemical Formula 14]

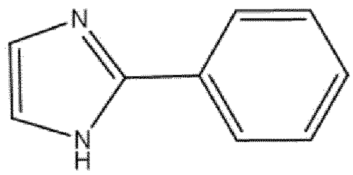

[Chemical Formula 16]

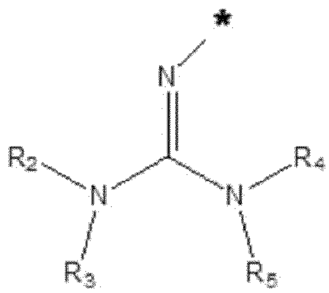

in Chemical Formula 16, * is a point of attachment, $R_2$, $R_3$, $R_4$ and $R_5$ are each H, $-CH_3$, $-NH_2$, $-NO_2$, $-(CH_2)nCH_3$ (n = 1 to 6), HC(=O)-, $CH_3C(=O)$-, $NH_2C(=O)$-,$-(CH_2)nCOOH$(n= 1 to 6), $-(CH_2)n-CH(NH_2)-COOH$(n = 1 to 6), -[CH-(COOH)]-$CH_2$-COOH, $-CH_2-CH(O-CH_2CH_3)_2$, -(C=S)-$NH_2$, -(C=NH)-NH-$(CH_2)nCH_3$(n= 0 to 6),-NH-(C=S)-SH, $-CH_2-(C=O)-O-C(CH_3)_3$, $-O-(CH_2)n-CH_2-(NH_2)-COOH$(n= 1 to 6),$-(CH_2)n-CH=CH_2$(n= 1-6), $-(CH_2)n-CH_2-CN$(n= 1 to 6), an aromatic functional group having 6 to 20 carbon atoms or a halogen group,

[Chemical Formula 17]

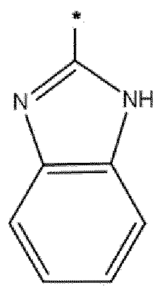

[Chemical Formula 18]

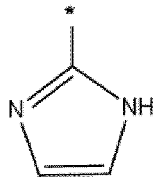

in Chemical Formulas 17 to 18, * is a point of attachment.

**5.** The slurry composition for producing an electrode for a redox flow battery according to claim 1, wherein the weight ratio between the powder of the carbon compound having electric conductivity and the ordered mesoporous carbon with a pore size of 3 nm to 4 nm is 1: 10.

**6.** The slurry composition for producing an electrode for a redox flow battery according to claim 1, wherein the powder of the carbon compound having electric conductivity has a maximum diameter of 5 $\mu$m to 100 $\mu$m, and includes carbon black, carbon nanotube, graphite, PAN-based carbon fiber, pitch-based carbon fiber, activated carbon, amorphous carbon, or a mixture of two or more thereof.

**7.** A method for producing an electrode for the redox flow battery comprising coating the slurry composition of claim 1 onto the substrate in a thickness of 10 to 300 $\mu$m.

**8.** A redox flow battery including the electrode produced using the slurry composition of claim 1.

**Amended claims under Art. 19.1 PCT**

**1.**
A slurry composition for producing an electrode for a redox flow battery comprising:

a powder of carbon compound having electrical conductivity and an ordered mesoporous carbon having average diameter of pores of 3 nm to 4 nm;
a binder resin including one or more polymers selected from the group consisting of perfluoro-based polymers, benzimidazole-based polymers, polyimide-based polymers, polyetherimide-based polymers, polyphenylene sulfide-based polymers, polysulfone-based polymers, polyetherketone-based polymers, polyethersulfone-based polymers, polyether ketone-based polymers, polyether-etherketone-based polymer, and polyterylquinoxaline-based polymers, which are substituted with one or more anion exchange groups; and
a hydrophobic organic solvent.

**2.** The slurry composition for producing an electrode for a redox flow battery according to claim 1, wherein the anionic exchange functional group contains one or more functional groups selected from the group consisting of ammonium, phosphonium, and sulfonium.

**3.** The slurry composition for producing an electrode for a redox flow battery according to claim 1, wherein the binder resin has a weight average molecular weight of 10,000 to 300,000.

**4.** The slurry composition for producing an electrode for a redox flow battery according to claim 1, wherein the anionic exchange functional group is any one selected from the group consisting of functional groups derived from compounds of the following Chemical Formulas 1 to 14 and functional groups represented by the following Chemical Formulas 16 to 18.

[Chemical Formula 1]

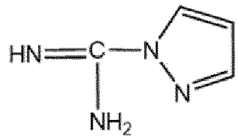

[Chemical Formula 2]

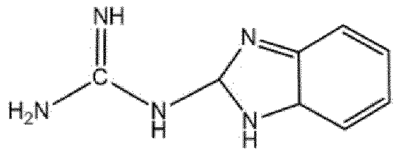

[Chemical Formula 3]

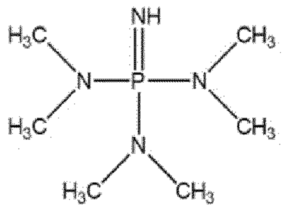

[Chemical Formula 4]

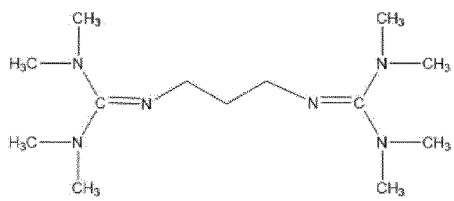

[Chemical Formula 5]

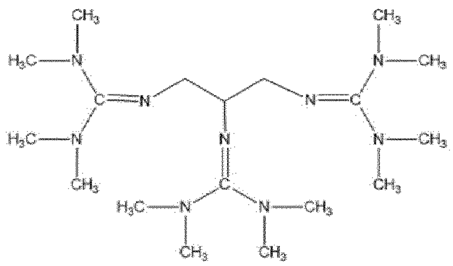

[Chemical Formula 6]

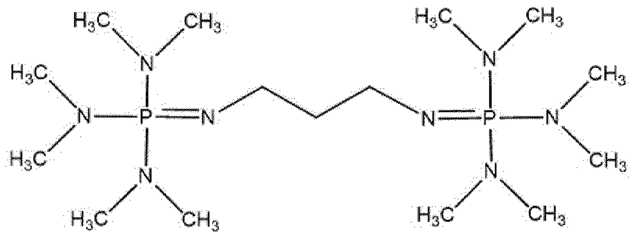

[Chemical Formula 7]

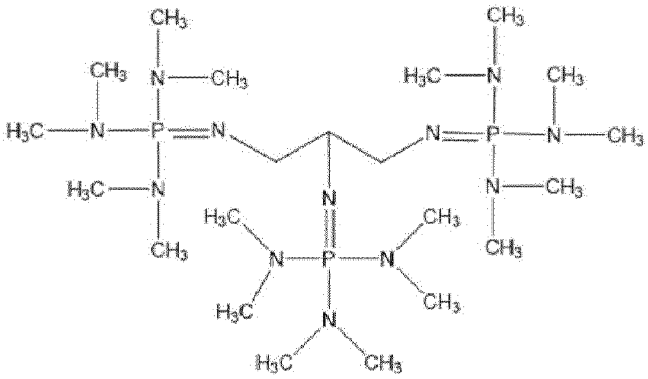

[Chemical Formula 8]

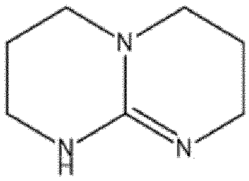

[Chemical Formula 9]

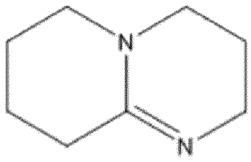

[Chemical Formula 10]

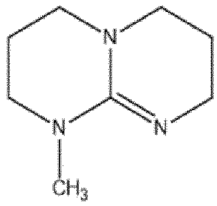

[Chemical Formula 11]

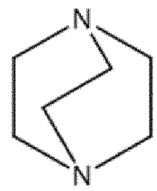

[Chemical Formula 12]

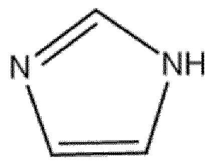

[Chemical Formula 13]

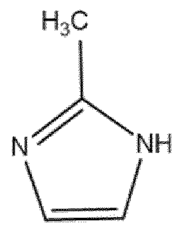

[Chemical Formula 14]

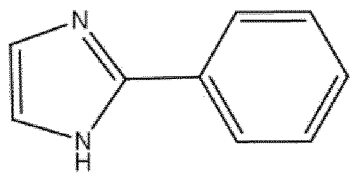

[Chemical Formula 16]

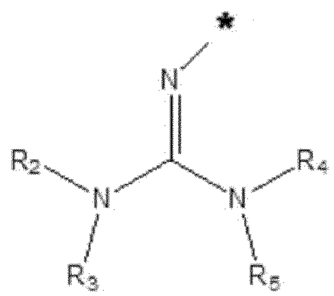

in Chemical Formula 16, * is a point of attachment, $R_2$, $R_3$, $R_4$ and $R_5$ are each H, $-CH_3$, $-NH_2$, $-NO_2$, $-(CH_2)nCH_3$ (n = 1 to 6), HC(=O)-, $CH_3C(=O)-$, $NH_2C(=O)-$, $-(CH_2)nCOOH$(n= 1 to 6), $-(CH_2)n-CH(NH_2)-COOH$ (n = 1 to 6), $-[CH-(COOH)]-CH_2-COOH$, $-CH_2-CH(O-CH_2CH_3)_2$,$-(C=S)-NH_2$, $-(C=NH)-NH-(CH_2)nCH_3$(n= 0 to 6), -NH-(C=S)-SH, $-CH_2-(C=O)-O-C(CH_3)_3$, $-O-(CH_2)n-CH_2-(NH_2)-COOH$(n= 1 to 6), $-(CH_2)n-CH=CH_2$(n= 1-6),

$-(CH_2)n-CH_2-CN$(n= 1 to 6), an aromatic functional group having 6 to 20 carbon atoms or a halogen group,

[Chemical Formula 17]

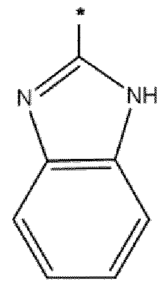

[Chemical Formula 18]

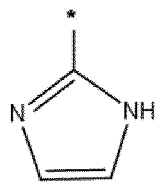

in Chemical Formulas 17 to 18, * is a point of attachment.

**5.** The slurry composition for producing an electrode for a redox flow battery according to claim 1, wherein the weight ratio between the powder of the carbon compound having electric conductivity and the ordered mesoporous carbon with average diameter of pores of 3 nm to 4 nm is 1: 10.

**6.** The slurry composition for producing an electrode for a redox flow battery according to claim 1, wherein the powder of the carbon compound having electric conductivity has a maximum diameter of 5 $\mu$m to 100 $\mu$m, and includes carbon black, carbon nanotube, graphite, PAN-based carbon fiber, pitch-based carbon fiber, activated carbon, amorphous carbon, or a mixture of two or more thereof.

**7.** A method for producing an electrode for the redox flow battery comprising coating the slurry composition of claim 1 onto the substrate in a thickness of 10 to 300 $\mu$m.

**8.** A redox flow battery including the electrode produced using the slurry composition of claim 1.

【FIG. 1】

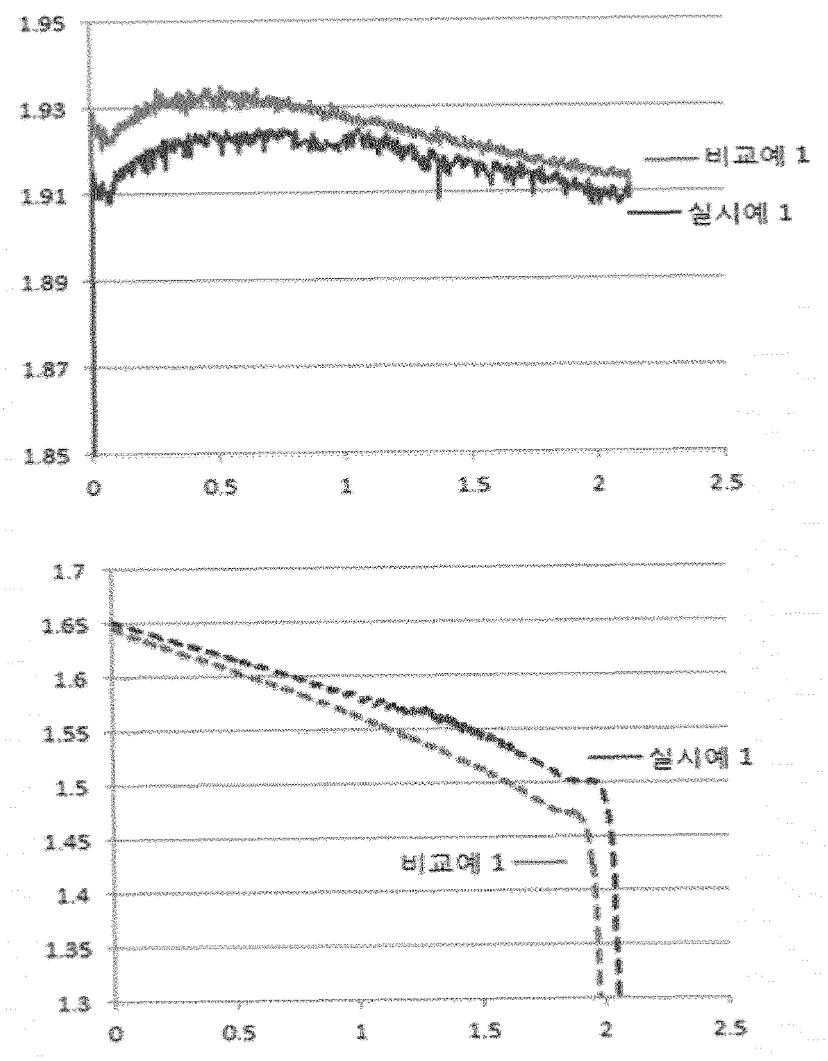


실시예 : Example

비교 실시예: Comparative Example

## INTERNATIONAL SEARCH REPORT

International application No.
**PCT/KR2017/009902**

A. CLASSIFICATION OF SUBJECT MATTER

***H01M 4/86(2006.01)i, H01M 8/18(2006.01)i***

According to International Patent Classification (IPC) or to both national classification and IPC

B. FIELDS SEARCHED

Minimum documentation searched (classification system followed by classification symbols)
H01M 4/86; H01M 8/18; H01M 8/02; H01M 8/10; C08F 2/46

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: redox flow battery, carbon, electrical conductivity, ordered mesoporous carbon, negative ion exchange functional group, binder resin

C. DOCUMENTS CONSIDERED TO BE RELEVANT

| Category* | Citation of document, with indication, where appropriate, of the relevant passages | Relevant to claim No. |
|---|---|---|
| Y | KR 10-2014-0070180 A (LOTTE CHEMICAL CORPORATION) 10 June 2014<br>See claims 1, 4-5, 15; paragraphs [0012], [0023], [0032]. | 1-8 |
| Y | JP 2000-331693 A (ASAHI GLASS CO., LTD.) 30 November 2000<br>See paragraphs [0007]-[0017], [0028]. | 1-8 |
| Y | KR 10-2015-0142007 A (TOYOTA JIDOSHA KABUSHIKI KAISHA et al.)<br>21 December 2015<br>See paragraph [0011]. | 1-8 |
| A | KR 10-2007-0086091 A (KURARAY CO., LTD.) 27 August 2007<br>See the entire document. | 1-8 |
| A | KR 10-1456916 B1 (KOREA INSTITUTE OF ENERGY RESEARCH) 03 November 2014<br>See the entire document. | 1-8 |

☐ Further documents are listed in the continuation of Box C.

☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 13 DECEMBER 2017 (13.12.2017) | **13 DECEMBER 2017 (13.12.2017)** |

| Name and mailing address of the ISA/KR | Authorized officer |
|---|---|
| Korean Intellectual Property Office<br>Government Complex-Daejeon, 189 Seonsa-ro, Daejeon 302-701, Republic of Korea<br>Facsimile No. +82-42-481-8578 | Telephone No. |

Form PCT/ISA/210 (second sheet) (January 2015)

**INTERNATIONAL SEARCH REPORT**
Information on patent family members

International application No.
**PCT/KR2017/009902**

| Patent document cited in search report | Publication date | Patent family member | Publication date |
|---|---|---|---|
| KR 10-2014-0070180 A | 10/06/2014 | KR 10-1437322 B1 | 02/09/2014 |
| JP 2000-331693 A | 30/11/2000 | NONE | |
| KR 10-2015-0142007 A | 21/12/2015 | CN 105229834 A | 06/01/2016 |
| | | EP 2999039 A1 | 23/03/2016 |
| | | EP 2999039 A4 | 25/05/2016 |
| | | JP 2017-185498 A1 | 23/02/2017 |
| | | JP 6063039 B2 | 18/01/2017 |
| | | KR 10-1759416 B1 | 18/07/2017 |
| | | US 2016-0093892 A1 | 31/03/2016 |
| | | WO 2014-185498 A1 | 20/11/2014 |
| KR 10-2007-0086091 A | 27/08/2007 | AT 534154 T | 15/12/2011 |
| | | CN 101107738 A | 16/01/2008 |
| | | EP 1852928 A1 | 07/11/2007 |
| | | EP 1852928 A4 | 06/10/2010 |
| | | EP 1852928 B1 | 16/11/2011 |
| | | JP 2006-202737 A | 03/08/2006 |
| | | KR 10-1261074 B1 | 06/05/2013 |
| | | US 2008-0113244 A1 | 15/05/2008 |
| | | US 7740968 B2 | 22/06/2010 |
| | | WO 2006-068279 A1 | 29/06/2006 |
| KR 10-1456916 B1 | 03/11/2014 | US 2014-0315115 A1 | 23/10/2014 |
| | | US 9306233 B2 | 05/04/2016 |

Form PCT/ISA/210 (patent family annex) (January 2015)